# EUROPEAN PATENT SPECIFICATION

(11) **EP 1 201 516 B1**
(45) Date of publication and mention of the grant of the patent: **29.09.2004**
(21) Application number: 01309023.8
(22) Date of filing: 24.10.2001
(51) Int. Cl.: B60S 1/38

(54) **Improvements relating to windscreen wiper blade latching**
Verbesserungen in Bezug auf Verrastungen für Scheibenwischerblatt
Perfectionnements apportés aux verrouillages pour balais d'essuie-glace

(30) Priority: 25.10.2000 GB 0026067
(43) Date of publication of application: 02.05.2002
(73) Proprietor: Trico Products Corporation, Rochester Hills, MI 48309 (US)
(72) Inventor: Pathmanathan, Mahesan, Cumbran, Gwent NP44 6EX (GB)
(74) Representative: Britter, Keith Palmer

(56) References cited:
- EP-A- 0 713 810
- DE-U- 9 207 915
- FR-A- 2 605 272
- US-A- 3 103 687
- US-A- 6 119 302

## Description

A conventional form of windscreen wiper assembly incorporates a harness having a series of claws which locate into grooves in a wiper rubber. There is a need to prevent the wiper rubber from sliding out of the claws, particularly at the ends of the harness. Where it is intended that the wiper rubber should be replaceable, then the means for holding the wiper rubber in place needs to be removable in some manner.

EP-A-0713810 discloses, generally, a windscreen wiper with a latch arrangement holding a wiper rubber in portions of a windscreen wiper harness, each end of the harness carrying a claw for location into grooves in the wiper rubber, and a free end portion extending beyond the claw and being provided with a vertical passageway relative to the wiper rubber in which is located a flexibly resilient latch as a snap fit to limit outward movement of the end of the wiper rubber and the vertebra rails located in grooves in the wiper rubber relative to the wiper harness.

It is, therefore, an object of this invention to provide removable means for securing a wiper rubber within the claws of a windscreen wiper harness.

Accordingly, the present invention is characterised from the known windscreen wiper with latch arrangement described above, in that the free end portion and the vertical passageway extend beyond the end of the wiper rubber.

Once a wiper rubber is located into the claw of the harness, the resilient latch can be snapped into place, at both ends of the harness, in order to hold the wiper rubber, so that it does not slide out at the ends. When the user wishes to replace the wiper rubber, the resilient latch can be forced out of the end portion of the harness to provide access to the wiper rubber to be replaced.

In a preferred arrangement, each latch has a cap portion which fits over the extending free end portion of the harness.

Preferably, each latch is formed with a neck portion to sit in the vertical passageway and a lower flexibly resilient portion which can be compressed to fit through that passageway during assembly and removal.

The invention may be performed in various ways and a preferred embodiment thereof will now be described, by way of example, with reference to the accompanying drawings, in which;-
Figures 1 and 2 are respective side and top plan views of part of a windscreen wiper harness;
Figure 3 is an end view of a latch member for securing in the end of the wiper harness of Figures 1 and 2; and
Figure 4 is the vertical section through the latch and harness arrangement of Figures 1 to 3.

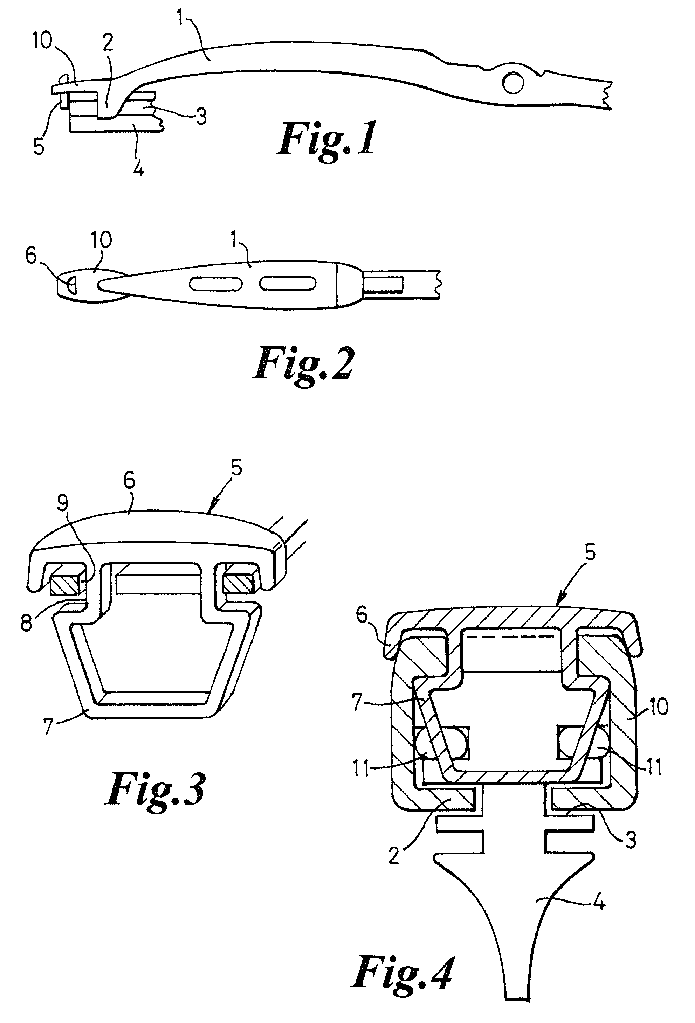

Figures 1 and 2 illustrate a yoke 1 forming part of a windscreen wiper harness. The outer end of the yoke incorporates a pair of claws 2 which fit into grooves 3 in a wiper rubber 4. In accordance with the invention, the outward movement of the wiper rubber 4 is limited by a latch member 5. As can be seen from Figures 3 and 4, this latch member comprises a cap portion 6 from which depends a shaped flexible member 7, which defines a neck 8. The flexible member 7 can be squeezed in at the sides so that it can then pass through the passageway 9 in a free end portion 10 of the yoke 1 which carries the claws 2.

Once the resilient portion 7 is released, the latch member 5 is held in place, with the neck 8 located around the parts of the free end portion 10 defining the passageway 9. The free end portion 10 and the vertical passageway 9 extend beyond the wiper rubber. As can be seen, particularly from Figure 4, the latch member 5 then acts to restrain outward movement of the wiper rubber 4 and vertebra rails 11 located in grooves in the wiper rubber.

## Claims

1. A windscreen wiper with a latch arrangement holding a wiper rubber (4) in portions of a windscreen wiper harness, each end of the harness carrying a claw (2) for location into grooves (3) in the wiper rubber (4), and a free end portion (10) extending beyond the claw (2) and being provided with a vertical passageway (9) relative to the rubber (4) in which is located a flexibly resilient latch member (5) as a snap fit to limit outward movement of the end of the wiper rubber (4) and any vertebra rails (11) located in grooves (3) in the wiper rubber (4) relative to the wiper harness,
**characterised in that** the free end portion (10) and the vertical passageway (9) extend beyond the end of the wiper rubber (4).

2. A windscreen wiper with a latch arrangement according to claim 1, wherein each latch member (5) has a cap portion (6) which fits over the extending free end portion (10) of the harness.

3. A windscreen wiper with a latch arrangement according to claim 1 or 2, wherein each latch member (5) is formed with a neck portion (8) to sit in the vertical passageway (9) and a lower flexibly resilient portion (7) which can be compressed to fit through the passageway (9) during assembly and removal.

## Patentansprüche

1. Scheibenwischer mit einer Einrastanordnung, die einen Wischergummi (4) in Abschnitten einer Scheibenwischerhalterung hält, wobei jedes Ende der Halterung eine Klaue (2) trägt zum Anordnen in Nuten (3) in dem Wischergummi (4), und einem freien Endabschnitt (10), der sich über die Klaue (2) hinaus erstreckt und einen vertikalen Durchgang (9) relativ zu dem Gummi (4) aufweist, in welchem ein elastisch federndes Einrastelement (5) als Einrastvorrichtung angeordnet ist, um eine Bewegung des Endes des Wischergummis (4) und jeglicher Wirbelschienen (11), die in Nuten (3) in dem Wischergummi (4) relativ zu der Wischerhalterung angeordnet sind, nach außen zu begrenzen, **dadurch gekennzeichnet, dass** der freie Endabschnitt (10) und der vertikale Durchgang (9) sich über das Ende des Wischergummis (4) hinaus erstrecken.

2. Scheibenwischer mit einer Einrastanordnung nach Anspruch 1, wobei jedes Einrastelement (5) einen Abdeckabschnitt (6) hat, welcher über den sich erstreckenden, freien Endabschnitt (10) der Halterung passt.

3. Scheibenwischer mit einer Einrastanordnung nach Anspruch 1 oder 2, wobei jedes Einrastelement (5) einen Halsabschnitt (8), welcher in dem vertikalen Durchgang (9) sitzt, und einen unteren elastisch federnden Abschnitt (7) aufweist, welcher komprimiert werden kann, so dass er während der Montage und Demontage durch den Durchgang (9) passt.

## Revendications

1. Balai d'essuie-glace avec une disposition de verrouillage maintenant un caoutchouc d'essuie-glace (4) dans des portions d'un harnais d'essuie-glace, chaque extrémité du harnais portant une fourche (2) en vue d'un positionnement dans des rainures (3) dans le caoutchouc d'essuie-glace (4), et une portion d'extrémité libre (10) s'étendant au-delà de la fourche (2) et étant munie d'un passage vertical (9) par rapport au caoutchouc (4) dans lequel est positionné un élément de verrouillage élastique de manière flexible (5) comme insertion par pression pour limiter le mouvement vers l'extérieur de l'extrémité du caoutchouc d'essuie-glace (4) et de tous rails de vertèbre (11) situés dans les rainures (3) dans le caoutchouc d'essuie-glace (4) par rapport au harnais d'essuie-glace.
**caractérisé en ce que** la portion d'extrémité libre (10) et le passage vertical (9) s'étendent au-delà de l'extrémité du caoutchouc d'essuie-glace (4).

2. Balai d'essuie-glace avec une disposition de verrouillage selon la revendication 1, dans lequel chaque élément de verrouillage (5) comprend une portion d'embout (6) qui rentre sur la portion d'extrémité libre qui s'étend (10) du harnais.

3. Balai d'essuie-glace avec une disposition de verrouillage selon la revendication 1 ou 2, dans lequel chaque élément de verrouillage (5) est formé avec une portion de collet (8) en vue d'une assise dans le passage vertical (9) et une portion élastique de manière flexible inférieure (7) pouvant être comprimée pour traverser le passage (9) lors du montage et du démontage.
